# EUROPÄISCHE PATENTSCHRIFT

(11) **EP 1 846 749 B1**
(45) Veröffentlichungstag und Bekanntmachung des Hinweises auf die Patenterteilung: **17.03.2010**
(21) Anmeldenummer: 05821468.5
(22) Anmeldetag: 30.12.2005
(51) Int. Cl.: B60R 16/03, G01N 21/35, G01N 21/47

(54) **STRASSENZUSTANDSERKENNUNGSVORRICHTUNG EINES KRAFTFAHRZEUGS UND VERFAHREN**
ROAD CONDITION DETECTING DEVICE FOR A MOTOR VEHICLE AND METHOD
DISPOSITIF D'IDENTIFICATION DE L'ETAT DES ROUTES, D'UNE AUTOMOBILE ET PROCEDE APPROPRIE

(30) Priorität: 10.02.2005 DE 102005007918
(43) Veröffentlichungstag der Anmeldung: 24.10.2007
(73) Patentinhaber: Valeo Schalter und Sensoren GmbH, 74321 Bietigheim-Bissingen (DE)
(72) Erfinder: BAYHA, Heiner, 71665 Vaihingen/Enz (DE); NIES, Jürgen, 75181 Pforzheim (DE); SCHENK, Jochen, 74255 Roigheim (DE); SCHULER, Thomas, 75446 Wiernsheim (DE)
(74) Vertreter: Pothmann, Karsten
(86) Internationale Anmeldenummer: PCT/EP2005/014121
(87) Internationale Veröffentlichungsnummer: WO 2006/084502

(56) Entgegenhaltungen:
- US-A- 5 318 143
- US-A- 5 982 278
- US-A1- 2004 011 120
- PATENT ABSTRACTS OF JAPAN Bd. 1998, Nr. 09, 31. Juli 1998 (1998-07-31) & JP 10 095245 A (NAGOYA DENKI KOGYO KK), 14. April 1998 (1998-04-14)

## Beschreibung

Die Erfindung betrifft eine Straßenzustandserkennungsvorrichtung eines Kraftfahrzeugs nach dem Oberbegriff des Anspruchs 1 sowie ein Verfahren zur Erkennung eines Zustands einer Straße nach dem Oberbegriff des Anspruchs 3. Eine solche Vorrichtung sowie ein solches Verfahren ist jeweils aus der JP 10095245, der US-A-5982278 und der US2004 011120 bekannt.

Darüber hinaus ist durch einen Serieneinsatz ein AFIL-Spurassistent (AFIL = Alarm bei Fahrspurabweichung durch Infrarot Linienerkennung) bekannt. Dabei werden Straßenmarkierungen durch einen oder mehrere Infrarotsensoren, die auf Helligkeitsunterschiede der Straßenoberfläche reagieren, erkannt. Beim versehentlichen Überfahren der Markierungslinien warnt der AFIL-Spurassistent den Fahrer durch Vibrationen in der Sitzfläche. Sender und Empfänger sind relativ zueinander und zur Straße so angeordnet, dass auf den Empfänger nur eine diffus rückgestreute Strahlung einfällt. Dazu ist ein vom Sender ausgehender Strahlungs um 15° aus einem Lot zur Straßenoberfläche heraus geneigt auf die ca. 30 cm tiefere Straßenoberfläche gerichtet, und der Empfänger ist in unmittelbarer Nachbarschaft des Senders angeordnet. Der Abstand zwischen Sender und Empfänger liegt in einer Größenordnung eines Zentimeters. Die Helligkeitsunterschiede werden durch Auswertung der diffus rückgestreuten Strahlungsintensität erkannt.

Untersuchungen der Universität Braunschweig haben gezeigt, dass ca. 20% aller Unfälle bei nasser Straße, aber ohne Regen passieren, also bei Bedingungen, wie sie zum Beispiel nach einem Regenguss bei ansonsten schönem Wetter herrschen. Die mit der nassen Straße verbundene Gefahr, die aus den niedrigeren Reibbeiwerten der nassen Straße erwächst, wird offenbar häufig unterschätzt.

Vor diesem Hintergrund besteht die Aufgabe der Erfindung in der Angabe einer Straßenzustandserkennungsvorrichtung, die Straßenoberflächen mit verringerten Reibbeiwerten erkennt und so eine automatische Einleitung von Maßnahmen zur Verringerung der Gefahren erlaubt.

Diese Aufgabe wird bei einer Vorrichtung der eingangs genannten Art dadurch gelöst, dass der Sender und der Empfänger relativ zueinander und relativ zur Straße so angeordnet sind, dass der Empfänger an der Straße spiegelnd reflektierte Infrarotstrahlung des Senders empfängt.

Ferner wird diese Aufgabe bei einem Verfahren der eingangs genannten Art dadurch gelöst, dass die vom Sender emittierte Infrarotstrahlung so auf die Straße gerichtet wird, dass der Empfänger an der Straße spiegelnd reflektierte Infrarotstrahlung des Senders empfängt.
Bei Versuchen hat sich gezeigt, dass die durch spiegelnde Reflexion an der Straßenoberfläche im Empfänger erzeugte Intensität beim Übergang von einer trockenen auf eine nasse Straße charakteristische Änderungen aufweist. Die Auswertung der Intensität erlaubt daher bei einer geänderten Ausrichtung der per se bereits bekannten Infrarotsensorik eine zuverlässige und automatisch erfolgende, den Fahrer nicht beanspruchende Unterscheidung von nassen Straßen mit niedrigeren Reibbeiwerten von trockenen Straßen mit höheren Reibbeiwerten.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein erstes Ausführungsbeispiel einer erfindungsgemäßen Vorrichtung;
- Fig. 2: ein Ausführungsbeispiel eines erfindungsgemäßen Sensors;
- Fig. 3: typische Signale, wie sich bei dem Ausführungsbeispiel nach der Fig. 1 bei trockener sowie bei nasser Straße einstellen; und
- Fig. 4: ein Ausführungsbeispiel eines erfindungsgemäßen Verfahrens.

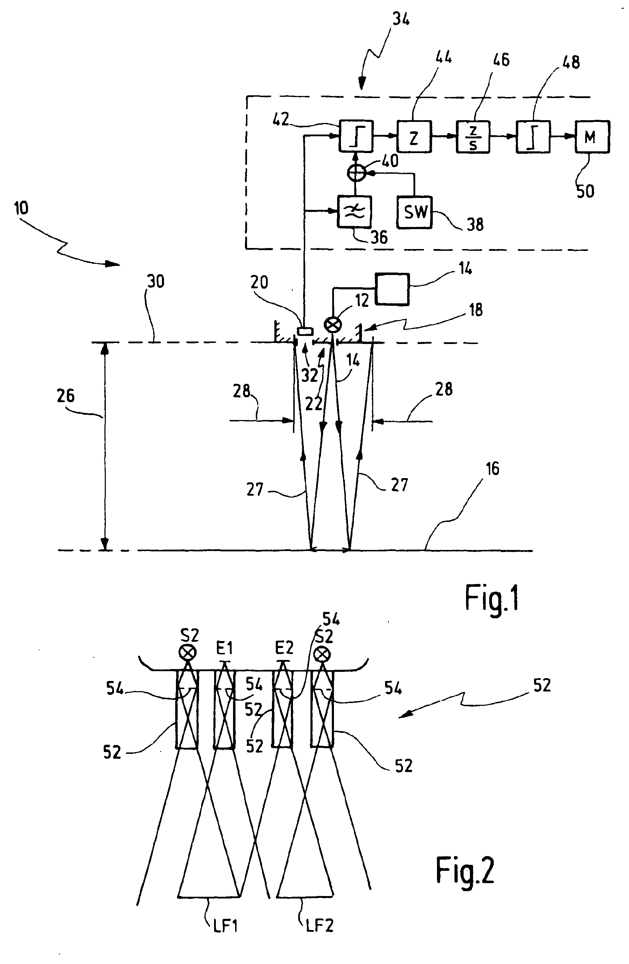

Im Einzelnen zeigt die Fig. 1 eine Straßenzustandserkennungsvorrichtung 10 eines Kraftfahrzeugs mit einem Sender 12, der Infrarotstrahlung 14 auf eine Straße 16 richtet. Der Sender 12 ist zum Beispiel eine Infrarot-Laserdiode, die von einer Treiberschaltung 14 mit einem Treiberstrom angesteuert wird. Der Sender 12 ist Teil eines Sensors 18, der neben dem Sender 12 einen Empfänger 20, beispielsweise eine Fotodiode, aufweist. Sender 12 und Empfänger 20 sind relativ zueinander und relativ zur Straße 16 so angeordnet, dass der Empfänger 20 an der Straße 16 spiegelnd reflektierte Infrarotstrahlung des Senders 12 empfängt.

Dazu ist der Strahlungskonus der auf die Straße 16 einfallenden Infrarotstrahlung 14 vorzugsweise nahezu senkrecht auf die Straße 16 gerichtet. Der Strahlenkonus der Infrarotstrahlung 14 wird dabei vorzugsweise durch eine Blende und/oder eine Linse 22 begrenzt und erzeugt auf der Straße 16 einen Lichtfleck mit einem Durchmesser 24 von einigen Zentimetern. Der Sender 12 ist in einem Abstand 26 zur Straße 16 in der Größenordnung von 30 cm typischerweise am Fahrzeugunterboden, an einer Bugschürze oder einem Stoßfänger des Fahrzeugs befestigt.

Von der Straße spiegelnd reflektierte Strahlung 27 erzeugt in einer Ebene 30 des Sensors 18 typischerweise ein Bild des Straßen-Lichtflecks, wobei dieses Bild in der Fig. 1 den Durchmesser des Zwischenraums zwischen den Pfeilen 28 besitzt. Der Empfänger 20 ist innerhalb dieses Durchmessers zum Beispiel hinter einer weiteren Linse und/oder Blende 32 angeordnet und empfängt daher eine bestimmte Intensität, die bei konstanter Strahlungsleistung des Senders 12 und konstanter Geometrie der Anordnung in Wesentlichen von dem Reflexionsvermögen der Straße 16 abhängig ist.

Dieses Reflexionsvermögen ist bei nasser Straße wesentlich höher als bei trockener Straße, so dass diese als Beispiele für Straßenoberflächen mit unterschiedlichen Reibbeiwerten betrachteten Zustände der Straße 16 zu unterschiedlichen Intensitäten der auf den Empfänger 20 auftreffenden reflektierten Strahlung führen.

Die Vorrichtung 10 weist ferner eine Signalverarbeitung 34 auf, die aus Eigenschaften der von dem Empfänger 20 empfangenen Infrarotstrahlung ein Signal bildet, das den Zustand der Straße 16 charakterisiert. Dazu weist die Signalverarbeitung 34 zum Beispiel einen Mittelwertbildner 36 auf, der ein elektrisches Ausgangssignal des Empfängers 20 mittelt. Als Mittelwertbildner kommt z.B. ein Tiefpass in Frage.

Ein Schwellenwertgeber 38 liefert zum Beispiel einen vorbestimmten Offsetwert, der durch eine additive Verknüpfung 40 mit dem Mittelwert zu einem Schwellenwert verknüpft wird. Durch die Verknüpfung des Offsets mit dem Mittelwert wird der resultierende Schwellenwert automatisch an verschiedene Straßenbeläge adaptiert. In einem Block 42 wird das Ausgangssignal des Empfängers 20 mit dem gebildeten Schwellenwert verglichen. Jede Überschreitung des Schwellenwerts, die also typisch für ein hohes, über einer adaptiv gelernten mittleren Intensität an dem Empfänger 20 ist, löst im nachfolgenden Block 44 eine Erhöhung eines Zählerstands Z aus. In einem Block 46 wird der Zählerstand Z in vorbestimmter Weise normiert, zum Beispiel durch eine Normierung auf eine seit Zählbeginn zurückgelegte Wegstrecke s. Der normierte Zählerstand wird anschließend im Block 48 mit einem weiteren Schwellenwert verglichen, wobei eine Überschreitung des weiteren Schwellenwertes über den Block 50 eine Maßnahme auslöst, die eine Straße mit geringem Reibbeiwert charakterisiert.

Die Maßnahme kann daraus bestehen, dass einem Fahrer des Fahrzeugs ein geringer Reibbeiwert signalisiert wird. Die Signalisierung kann akustisch und/oder optisch und/oder haptisch, zum Beispiel durch Erzeugen von Vibrationen einer Fahrersitzfläche erfolgen. Die haptische Signalisierung hat dabei den besonderen Vorteil, dass sie vom Fahrer zusätzlich und unabhängig von optischen und akustischen Reizen, wie sie in der Verkehrssituation üblicherweise auftreten, wahrnehmbar ist.

Alternativ oder ergänzend können Eingreifparameter eines Fahrstabilitätssystems geändert werden und/oder Parameter einer Bremscharakteristik angepasst und/oder Parameter einer Abstandsregelung geändert werden.

Auf diese Weise können diese sicherheitsrelevanten Parameter von Fahrerassistenzsystemen ohne Ablenkung des Fahrers automatisch geändert werden, so dass Gefahrensituationen zum Beispiel durch einen größeren Abstand bei nasser Straße 16 vermieden werden können. Trotzdem auftretenden Gefahren kann gegebenenfalls früher und wirkungsvoller begegnet werden, in dem beispielsweise bei nasser Straße regelmäßig die Bremsscheiben durch kurzes Anlegen der Bremsbeläge von einem Feuchtigkeitsfilm befreit werden oder indem ein Fahrstabilitätsprogramm bereits früher und sanfter eingreift als bei trockener Straße 16.

Eine bevorzugte Ausgestaltung der Vorrichtung zeichnet sich durch eine bauliche Sensoreinheit aus, die je zwei Sender zusammen mit zwei Empfängern aufweist, wobei ein erster Sender zusammen mit einem ersten Empfänger eine erste Sender-Empfänger-Paarung bildet und wobei ein zweiter Sender zusammen mit einem zweiten Empfänger eine zweite Sender-Empfänger-Paarung bildet.

Diese Ausgestaltung kann man sich durch schlichte Verdopplung der in der Fig. 1 dargestellten Struktur vorstellen, wobei die beiden Sender und Empfänger zu einer baulichen Sensoreinheit zusammengefasst sind. Fig. 2 zeigt einen solchen Sensor 52 mit einem ersten Sender S1, einem ersten Empfänger E1, einem zweiten Sender S2 und einem zweiten Empfänger E2. Die S1/E1 Paarung nutzt den Lichtfleck LF1 und die S2/E2 Paarung nutzt den Lichtfleck LF2. Schutzrohre 52 schützen die Linsen/Blenden 54 vor Verschmutzung durch Staub und Straßenschmutz. Die Signale beider Empfänger E1, E2 werden vorzugsweise getrennt verarbeitet, so dass auch bei Ausfall eines der Sender oder Empfänger noch eine Paarung funktionsfähig bleibt. Die Entscheidung, ob eine der beschriebenen Maßnahmen eingeleitet wird, kann davon abhängig gemacht werden, ob wenigstens einer oder aber beide Paarungen eine nasse Straße anzeigen.

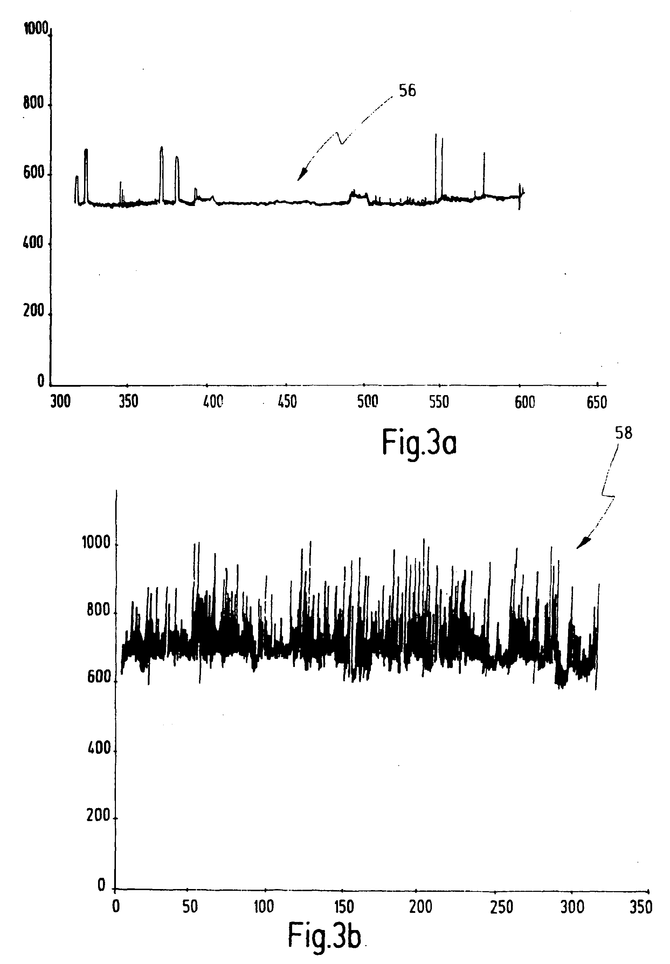

Fig. 3 zeigt in der Fig. 3a einen typischen Signalverlauf 56 für eine trockene Straße und in der Fig. 3b einen typischen Signalverlauf für eine nasse Straße, wobei die Signalhöhe jeweils ein Maß für die auf einen Empfänger 20, E1, E2 einfallende Intensität ist. Die Signale 56, 58 sind über einer zurückgelegten Wegstrecke in willkürlichen Einheiten aufgetragen.

Das Signal 56 in der Fig. 3a zeichnet sich durch einen vergleichsweise niedrigen Mittelwert aus, in dem nur vereinzelte Peaks auftreten. Das im Einzelfall auch bei trockener Straße 16 nicht vorhersehbare Auftreten der einzelnen Peaks sorgt jedoch dafür, dass die Höhe des Signals 56 nicht allein als Kriterium zur Unterscheidung einer trockenen von einer nassen Straße 16 verwendet werden kann. Bei nasser Straße 16 treten diese Peaks jedoch aufgrund des höheren Reflexionsvermögens der mit Wasser benetzten Oberflächenstruktur der Straße 16 wesentlich häufiger auf. Dies ist aus dem Verlauf des Signals 58, das bei einer nassen Straße 16 aufgenommen wurde, unmittelbar ersichtlich.

Im Rahmen einer Ausgestaltung von Verfahrensaspekten der Erfindung wird die Häufigkeit der Peaks zur Unterscheidung von Zuständen einer Straße 16 mit verschiedenen Reibbeiwerten im Allgemeinen, und, insbesondere, zur Unterscheidung einer trockenen Straße 16 von einer nassen Straße 16 verwendet.

Wie ein vergleich der Signale 56 und 58 zeigt, ist es gerade die Häufigkeit, mit der Peaks auftreten, die verschiedene Zustände der Straße 16 treffend charakterisiert. Eine Häufigkeit ist überdies durch Zählvorgänge messtechnisch einfach zu erfassen.

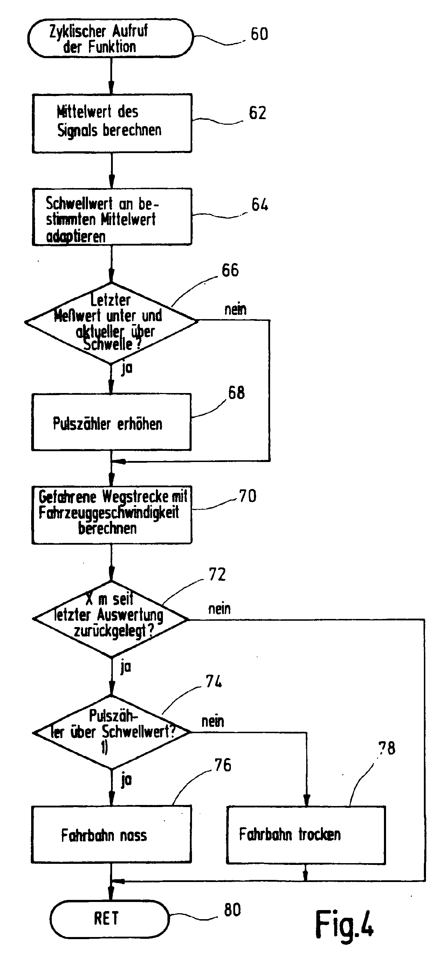

Fig. 4 zeigt ein Flussdiagramm einer solchen Ausgestaltung, wie es von der in der Fig. 1 dargestellten Signalverarbeitung 34 abgearbeitet wird. Dazu wird nach einem zyklisch durch einen Schritt 60 erfolgenden Aufruf des abzuarbeitenden Programms zunächst in einem Schritt 62 ein Mittelwert des Signals 56, 58 bestimmt. Anschließend wird in einem Schritt 64 ein Schwellenwert an den vorher bestimmten Mittelwert adaptiert. Dies kann zum Beispiel durch Addieren eines vorbestimmten Offsetwertes zu dem Mittelwert geschehen.

Durch die Bildung des Mittelwerts wird der Schwellenwert adaptiv an das Reflexionsvermögen der Straße 16 angepasst, das aufgrund unterschiedlicher Straßebeläge auch im trockenen Zustand schwanken kann und dessen absolute Höhe daher nur eingeschränkt zur Unterscheidung von trockenen und nassen Straßen dienen kann.

Im nächsten Schritt 66 wird abgefragt, ob ein Peak vorliegt. Ein Peak zeichnet sich dadurch aus, dass ein n-ter Messwert des Signals 56, 58 über dem Schwellenwert liegt, während ein vorher bestimmter (n-1)-ter Messwert noch unterhalb des Schwellenwerts lag. Wenn diese Abfrage bejaht wird, erfolgt im Schritt 68 eine Erhöhung eines Puls- oder Peakzählers. Daran schließt sich ein Schritt 70 an, in dem die gefahrene Wegstrecke zum Beispiel aus dem in jedem Fahrzeug üblicherweise vorliegenden Geschwindigkeitssignal bestimmt wird. Dieser Schritt wird auch erreicht, wenn die Abfrage im Schritt 66 verneint wurde. Allerdings erfolgt in diesem Fall kein Erhöhung des Pulszählerstandes.

Im Schritt 70 wird überprüft, ob seit der letzten Auswertung eine vorbestimmte Mindestwegstrecke von X Metern zurückgelegt worden ist. Wenn dies der Fall ist, wird der aktuelle Puls- oder Peakzählerstand im Schritt 74 mit einem weiteren Schwellenwert verglichen. Eine Überschreitung des weiteren Schwellenwertes führt zum Schritt 76, in dem eine nasse Straße erkannt wird, während eine Nicht-Überschreitung zum Schritt 78 führt, in dem eine trockene Straße erkannt wird. Anschließend kehrt das Verfahren über den Return-Schritt 80 in ein übergeordnetes Hauptprogramm zurück, in dem zum Beispiel die weiter oben genannten Maßnahmen bei erkannter nasser Straße ergriffen werden.

Die Erfassung von Überschreitungen des Schwellenwertes durch einen Zählerstand ist besonders unempfindlich in Bezug auf Störungen im Signal 56, 58, und ist darüber hinaus in der Signalverarbeitung einfach durchzuführen.

Als Alternative kann ein Nässegrad der Straße 16 auch als Funktion eines Puls- oder Peakzählerstandes in Verbindung mit einer mittleren Abweichung der Höhen der Peaks vom Mittelwert bestimmt werden.

Fig. 4 zeigt damit insbesondere eine Ausgestaltung, wie sie mit einer als Rechner realisierten Signalauswertung 34 durchgeführt wird.

## Patentansprüche

1. Straßenzustandserkennungsvorrichtung (10) eines Kraftfahrzeugs mit wenigstens einem Sender (12), der Infrarotstrahlung (14) auf eine Straße (16) richtet, wenigstens einem Empfänger (20), der von der Straße (16) reflektierte Infrarotstrahlung (27) empfängt, und einer Signalverarbeitung (34), die aus Eigenschaften der von dem Empfänger (20) empfangenen Infrarotstrahlung ein Signal (56, 58) bildet, das einen Zustand der Straße (16) charakterisiert, wobei der Sender (12) und der Empfänger (20) relativ zueinander und relativ zur Straße (16) so angeordnet sind, dass der Empfänger (20) an der Straße (16) spiegelnd reflektierte Infrarotstrahlung (14, 27) des Senders (12) empfängt, **dadurch gekennzeichnet, dass** die Signalverarbeitung (34) dazu eingerichtet ist, einen Mittelwert des Signals (56, 58) zu bilden, einen Schwellenwert an den vorher bestimmten Mittelwert zu adaptieren, das Signal (56, 58) mit dem Schwellenwert zu vergleichen, Überschreitungen des Schwellenwertes durch das Signal (56, 58) zu zählen und eine Straße (16) mit geringem Reibbeiwert von einer Straße (16) mit hohem Reibbeiwert durch eine Auswertung der Häufigkeit der Überschreitungen zu unterscheiden.

2. Vorrichtung (10) nach Anspruch 2, **gekennzeichnet durch** eine bauliche Sensoreinheit (52), die je zwei Sender (S1, S2) zusammen mit zwei Empfängern (E1, E2) aufweist, wobei ein erster Sender (S1) zusammen mit einem ersten Empfänger (E1) eine erste Sender-Empfänger-Paarung bildet und wobei ein zweiter Sender (S2) zusammen mit einem zweiten Empfänger (E2) eine zweite Sender-Empfänger-Paarung bildet.

3. Verfahren zur Erkennung eines Zustands einer Straße (16), auf der sich ein Kraftfahrzeug bewegt, mit den Schritten: Richten einer von wenigstens einem Sender (12) abgestrahlten Infrarotstrahlung (14) auf eine Straße (16), Empfangen einer von der Straße (16) reflektierten Infrarotstrahlung (27) durch wenigstens einen Empfänger (20), Bilden eines Signals (56, 58), das einen Zustand der Straße (16) charakterisiert, aus Eigenschaften der von dem Empfänger empfangenen Infrarotstrahlung, wobei die vom Sender (12)emittierte Infrarotstrahlung (14) so auf die Straße (16) gerichtet wird, dass der Empfänger (20) an der Straße (16) spiegelnd reflektierte Infrarotstrahlung (14, 27) des Senders (12) empfängt, **dadurch gekennzeichnet, dass** ein Mittelwert des Signals (56, 58) gebildet wird, aus dem Mittelwert des Signal ein Schwellenwert gebildet wird, und Überschreitungen des Schwellenwertes durch das Signal (56, 58) gezählt werden und eine Straße (16) mit geringem Reibbeiwert von einer Straße (16) mit hohem Reibbeiwert durch eine Häufigkeit der Überschreitungen unterschieden wird.

4. Verfahren nach Anspruch 3, **dadurch gekennzeichnet, dass** Überschreitungen des Schwellenwertes durch einen Zählerstand gezählt werden, der immer dann erhöht wird, wenn ein aktueller Wert des Signals (56, 58) über dem Schwellenwert liegt und ein unmittelbar vorhergehender Wert des Signals (56, 58) unterhalb des Schwellenwertes liegt.

5. Verfahren nach Anspruch 3 oder 4, **dadurch gekennzeichnet, dass** der Zählerstand auf eine während eines Zählvorgangs vom Fahrzeug zurückgelegte Wegstrecke normiert wird der normierte Zählerstand als Maß für die Häufigkeit verwendet wird.

6. Verfahren nach Anspruch 5, **dadurch gekennzeichnet, dass** der normierte Zählerstand mit einem Schwellenwert verglichen wird und dass ein über dem Schwellenwert liegender Zählerstand wenigstens eine Maßnahme auslöst, die eine Straße mir geringem Reibbeiwert charakterisiert.

7. Verfahren nach Anspruch 6, **dadurch gekennzeichnet, dass** einem Fahrer des Fahrzeugs ein geringer Reibbeiwert signalisiert wird.

8. Verfahren nach Anspruch 7, **dadurch gekennzeichnet, dass** die Signalisierung akustisch und/oder optisch und/oder haptisch erfolgt.

9. Verfahren nach Anspruch 8, **dadurch gekennzeichnet, dass** als Maßnahme Eingreifparameter eines Fahrstabilitätssystems geändert werden und/oder dass Parameter einer Bremscharakteristik angepasst und/oder Parameter einer Abstandsregelung geändert werden.

## Claims

1. Road condition detecting device (10) for a motor vehicle having at least one transmitter (12) which directs infrared radiation (14) onto a road (16), at least one receiver (20) which receives reflected infrared radiation (27) from the road (16), and a signal processing means (34) which forms, from properties of the infrared radiation received by the receiver (20), a signal (56, 58) which characterizes a state of the road (16), wherein the transmitter (12) and the receiver (20) are arranged relative to one another and relative to the road (16) in such a way that the receiver (20) receives infrared radiation (14, 27) of the transmitter (12) which is reflected in a mirroring fashion at the road (16), **characterized in that** the signal processing means (34) is configured to form a mean value of the signal (56, 58), to adapt a threshold value to the previously determined mean value, to compare the signal (56, 58) with the threshold value, to count upward transgressions of the threshold value by the signal (56, 58) and to differentiate a road (16) with a low coefficient of friction from a road (16) with a high coefficient of friction by evaluating the frequency of the upward transgressions.

2. Device (10) according to Claim 1, **characterized by** a central structural sensor unit (52) which has in each case two transmitters (S1, S2) together with two receivers (E1, E2), wherein a first transmitter (S1) forms, together with a first receiver (E1), a first transmitter/receiver pairing, and wherein a second transmitter (S2) forms, together with a second receiver (E2), a second transmitter/receiver pairing.

3. Method for detecting a state of a road (16) on which a motor vehicle is moving, having the steps:
direction of infrared radiation (14), radiated by at least one transmitter (12) onto a road (16), reception of infrared radiation (27), reflection from the road (16), by at least one receiver (20), formation of a signal (56, 58) which characterizes a state of the road (16), from properties of the infrared radiation received by the receiver, wherein the infrared radiation (14) which is emitted by the transmitter (12) is directed onto the road (16) in such a way that the receiver (20) receives infrared radiation (14, 27) of the transmitter (12) which is reflected in a mirroring fashion at the road (16), **characterized in that** a mean value of the signal (56, 58) is formed, a threshold value is formed from the mean value of the signal, and upward transgressions of the threshold value by the signal (56, 58) are counted, and a road (16) with a low coefficient of friction is differentiated from a road (16) with a high coefficient of friction by means of the frequency of the upward transgressions.

4. Method according to Claim 3, **characterized in that** upward transgressions of the threshold value are counted by means of a counter reading which is increased whenever a current value of the signal (56, 58) is above the threshold value, and a directly preceding value of the signal (56, 58) is below the threshold value.

5. Method according to Claim 3 or 4, **characterized in that** the counter reading is standardized to a distance covered by the vehicle during a counting process, and the standardized counter reading is used as a measure of the frequency.

6. Method according to Claim 5, **characterized in that** the standardized counter reading is compared with a threshold value, and **in that** a counter reading which is above the threshold value triggers at least one measure which characterizes a road with a low coefficient of friction.

7. Method according to Claim 6, **characterized in that** a low coefficient of friction is signalled to the driver of the vehicle.

8. Method according to Claim 7, **characterized in that** the signalling takes place acoustically and/or visually and/or haptically.

9. Method according to Claim 8, **characterized in that** the intervention parameters of a driving stability system are changed as a measure, and/or **in that** parameters of a braking characteristic are adapted and/or parameters of an inter-vehicle distance control system are changed.

## Revendications

1. Dispositif (10) de reconnaissance de l'état de la chaussée pour un véhicule automobile, qui présente
au moins un émetteur (12) qui dirige un rayonnement infrarouge (14) sur une chaussée (16),
au moins un récepteur (20) qui reçoit le rayonnement infrarouge (27) réfléchi par la chaussée (16) et
un traitement de signaux (34) qui, à partir des propriétés du rayonnement infrarouge reçu par le récepteur (20), forme un signal (56, 58) qui caractérise l'état de la chaussée (16),
l'émetteur (12) et le récepteur (20) étant disposés l'un par rapport à l'autre et par rapport à la chaussée (16) de telle sorte que le récepteur (20) reçoit le rayonnement infrarouge (14, 27) du récepteur (12) réfléchi par réflexion sur la chaussée (16),
**caractérisé en ce que**
le traitement des signaux (34) est conçu pour former une valeur moyenne (56, 58) du signal, pour adapter une valeur de seuil à la valeur moyenne déterminée précédemment, pour comparer le signal (56, 58) à la valeur de seuil, pour compter les dépassements de la valeur de seuil par le signal (56, 58) et pour distinguer une chaussée (16) à bas coefficient de frottement d'une chaussée (16) à haut coefficient de frottement par évaluation de la fréquence des dépassements.

2. Dispositif (10) selon la revendication 1, **caractérisé par** une unité modulaire de détection (52) qui présente deux émetteurs (S1, S2) ainsi que deux récepteurs (E1, E2), un premier émetteur (S1) formant avec un premier récepteur (E1) une première paire émetteur-récepteur et un deuxième récepteur (S2) formant avec un deuxième récepteur (E2) une deuxième paire émetteur-récepteur.

3. Procédé de reconnaissance de l'état d'une chaussée (16) sur laquelle se déplace un véhicule automobile, le procédé comprenant les étapes qui consistent à :
diriger sur une chaussée (16) un rayonnement infrarouge (14) émis par au moins un émetteur (12),
recevoir sur au moins un récepteur (20) un rayonnement infrarouge (27) réfléchi par la chaussée (16),
former un signal (56, 58) qui caractérise l'état de la chaussée (16) à partir des propriétés du rayonnement infrarouge reçu par le récepteur,
le rayonnement infrarouge (14) émis par l'émetteur (12) étant dirigé sur la chaussée (16) de telle sorte que le récepteur (20) reçoive le rayonnement infrarouge (14, 27) de l'émetteur (12) réfléchi par réflexion sur la chaussée (16),
**caractérisé en ce que**
une valeur moyenne (56, 58) du signal est formée,
**en ce qu'**une valeur de seuil est formée à partir de la valeur moyenne du signal,
**en ce que** les dépassements de la valeur de seuil par le signal (56, 58) sont comptés et
**en ce qu'**une chaussée (16) à bas coefficient de frottement est distinguée d'une chaussée (16) à haut coefficient de frottement par la fréquence des dépassements.

4. Procédé selon la revendication 3, **caractérisé en ce que** les dépassements de la valeur de seuil sont comptés par l'état d'un compteur qui augmente chaque fois qu'une valeur effective du signal (56, 58) est située au-dessus de la valeur de seuil et chaque fois que la valeur immédiatement précédente du signal (56, 58) est située en dessous de la valeur de seuil.

5. Procédé selon les revendications 3 ou 4,
**caractérisé en ce que** l'état du compteur est normalisé pendant une opération de comptage sur un trajet parcouru par le véhicule et **en ce que** l'état normalisé du compteur est utilisé comme mesure de la fréquence.

6. Procédé selon la revendication 5, **caractérisé en ce que** l'état normalisé du compteur est comparé à une valeur de seuil et **en ce que** lorsque l'état du compteur situé au-dessus de la valeur de seuil, au moins une disposition qui caractérise une chaussée à petit coefficient de frottement est déclenchée.

7. Procédé selon la revendication 6, **caractérisé en ce qu'**un bas coefficient de frottement est signalé au conducteur du véhicule.

8. Procédé selon la revendication 7, **caractérisé en ce que** la signalisation s'effectue acoustiquement, optiquement et/ou tactilement.

9. Procédé selon la revendication 8, **caractérisé en ce que** comme disposition, des paramètres qui agissent sur un système de stabilité de la conduite sont modifiés, des paramètres d'une caractéristique de freinage sont adaptés et/ou des paramètres d'une régulation de distance sont modifiés.
